# EUROPEAN PATENT APPLICATION

(11) **EP 1 607 412 A1**
(43) Date of publication of application: **21.12.2005**
(21) Application number: 05253461.7
(22) Date of filing: 06.06.2005
(51) Int. Cl.: C08F 2/44

(54) **Hydrogel Composites**

(30) Priority: 07.06.2004 GB 0412652; 22.10.2004 GB 0423487
(71) Applicant: First Water Limited, Marlborough, Wiltshire SN8 2RB (GB)
(72) Inventor: Garcia, Susana Sainz, Wantage, Oxfordshire OX12 9XW (GB); Jeffrey, Gareth Charles, Binfield, Bracknell BerkshireRG42 4DY (GB); Munro, Hugh Semple, Weston-sub-Edge,Chipping Camden GL55 6QT (GB); Andrews, Philip, Ramsbury, Marlborough Wiltshire SN8 2RB (GB)
(74) Representative: Brown, David Leslie

(57) **Abstract**

A method for producing a hydrogel/fibre composite comprises: impregnating fibres of a fibrous material with a precursor solution comprising at least one polymerisable, and optionally also crosslinkable, monomer such that at least partial swelling of the fibres takes place; and polymerising, and optionally also crosslinking, the at least one monomer after impregnation and a least partial swelling of the fibres such that the integrity of the fibrous material is at least partially preserved in the resulting hydrogel/fibre composite, provided that the crosslinking is not initiated solely by cation release from the fibres of the fibrous material.

The invention provides a hydrogel/fibre composite prepared or preparable by the said method. The hydrogel/fibre composite may be adhesive to human skin with good properties of performance and subsequent painless removal. The composite is found to maintain acceptable strength and structural integrity on hydration or across one or more hydration/dehydration cycle, and thus finds use in, for example, biomedical products where this property is required.

## Description

### Field of the Invention

The present invention relates to hydrogel composites and their manufacture, more particularly to composites of hydrogels and fibrous materials having high strength on absorption of water, saline or biological fluids. The invention also relates to such hydrogel composites suitable for use in a variety of applications, such as wound and bums dressings, ostomy devices, biomedical electrodes and other devices where contact with mammalian skin is required.

The expression "hydrogel" and like expressions, used herein, are not to be considered as limited to gels which contain water, but extend generally to all hydrophilic gels and gel compositions, including those containing organic non-polymeric components in the absence of water.

### Background of the Invention

Hydrogels are macromolecular networks swollen partially or to equilibrium with a suitable fluid, normally an aqueous fluid. It is known that hydrogels are useful in a number of biomedical applications, including but not limited to wound and bums dressings, biomedical electrodes and skin adhesives, particularly because of their ability to donate and absorb fluid and hence maintain a moist but not wet environment.

There are, however, disadvantages with prior art hydrogel compositions and materials in that they can be weak and difficult to handle particularly when they have absorbed fluid, e.g. the exudate arising from a wound.

EP-B-0901382, the contents of which are incorporated herein by reference, describes improved reinforced hydrogel compositions based on alginate fibres impregnated with pre-made hydrophilic polymers that are crosslinked by ions released from the fibres. These hydrogels are in a hydrated form and donate moisture to a wound. These materials require the release of cations from the fibre to crosslink the hydrophilic polymer. Hence, the range and scope of materials that may be used for manufacturing these reinforced hydrogels is limited to polymers having pendant carboxylic acid groups.

It is an object of the present invention to obviate or mitigate the above disadvantages, or at least to provide an acceptable alternative to the prior art systems.

### Brief Description of the Invention

According to a first aspect of the present invention, there is provided a method for producing a hydrogel/fibre composite comprising: impregnating fibres of a fibrous material with a precursor solution comprising at least one polymerisable, and optionally also crosslinkable, monomer such that at least partial swelling of the fibres takes place, and polymerising, and optionally also crosslinking, the at least one monomer after impregnation and a least partial swelling of the fibres such that the integrity of the fibrous material is at least partially preserved in the resulting hydrogel/fibre composite, provided that the crosslinking is not initiated solely by cation release from the fibres of the fibrous material.

Generally speaking, when crosslinking does not take place, polymeric entanglement will normally take place to provide the necessary properties of the hydrogel/fibre composite.

According to a second aspect of the present invention, there is provided a hydrogel/fibre composite prepared or preparable by the method of the first aspect of the invention.

According to a further aspect of the present invention, there is provided a biomedical product comprising the hydrogel/fibre composite of the second aspect of the invention.

Preferably, the crosslinking, when present, is achieved totally by means other than cation release from fibres of the fibrous material.

We have found that the present invention can provide hydrogel/fibre composites in which a surprising enhancement of the structural integrity and strength is achieved, particularly when wet (hydrated), in comparison with the hydrogel alone and the fibrous material alone. For example, technical data from the suppliers of the Oasis™ fibrous material used in the Examples described below indicates that this material is not a strong material in comparison with textile fibres. However, when it is used in the hydrogel/fibre composites according to the present invention, a very acceptable strength is achieved. Moreover, the hydrogel/fibre composites in accordance with the invention have been found to be capable of undergoing at least one hydration/dehydration cycle while maintaining very acceptable structural integrity and strength throughout, the main change across the cycle being the dimensions as the swelling and shrinking takes place, with substantial retention of general form and self-supportability of the structure.

These properties provide the basis for valuable uses of the hydrogel/fibre composites, for example in the manner described below, as a substantial disadvantage of prior art hydrogels has been a loss of structural integrity on hydration or across a hydration/dehydration cycle, leading to disintegration during manufacture, storage, transportation and/or use.

### Detailed Description of the Invention

### The Fibrous Material

The fibrous material is preferably a coherent structure comprised of fibres, capable of being swollen by aqueous fluid, that are held together (e.g. by interweaving, entangling, adhesion, compaction, partial melting together or a combination thereof) to maintain overall coherency of the structure. The expression "fibres" includes all elongate forms such as strips, strands and threads. The fibres may be of unitary construction (e.g. by extrusion) or may be composed of a plurality of smaller filaments, which themselves may be secured together in the fibre by any appropriate means, e.g. by intertwining, entangling, spinning, adhesion, partial melting together or a combination thereof. Examples of such structures are knitted, woven and non-woven materials such as felts, mats and the like.

The fibres may, for example, be biodegradable or bioresorbable, so that they will degrade or be absorbed, over time, in the human or animal body.

The fibres and/or filaments can be of constant transverse cross-sectional configuration along their length or a portion thereof, or the transverse cross-sectional configuration of the fibres and/or filaments can vary along their length randomly or regularly. The transverse cross-sectional configuration at any particular point along the length of a particular fibre or filament can be any appropriate shape, including square, rectangular, triangular, polygonal, circular, oval, ellipsoidal, irregular, any of the above with indentations, any of the above with projections, or an approximation to any of the above.

The fibres of the fibrous material are absorbent, so that swelling of the fibrous material includes swelling of individual fibres through uptake of the precursor solution into the fibres.

Particularly preferred fibrous material structures comprise polymeric fibres capable of swelling in aqueous fluid and have a basis weight of 20 to 300 grams per square metre (gsm), more preferably 20 to 200 gsm and, for wound dressings, more preferably 35 to 180 gsm. The non-impregnated fibrous structure should be capable of absorbing at least 1g of saline per 1g of fibre preferably greater than 2g/g more preferably greater than 5g/g and even more preferably greater than 10g/g.

The polymeric fibres may be natural, synthetic or any combination thereof. Particularly preferred types of fibre comprise calcium alginate (available from, for example, Acordis Speciality Fibres), carboxymethyl cellulose fibres (available from, for example, Acordis Speciality Fibres), Sodium Polyacrylate (available, for example, under the tradename Oasis™ from Acordis, Technical Absorbents Limited).

The fibrous material structure may be in the form of a continuous sheet or perforated. The perforations may be of any shape, for example - but not limited to, circular, square, rectangular, triangular, polygonal, circular, oval, ellipsoidal, irregular, any of the above with indentations, any of the above with projections, or an approximation to any of the above. The side walls of the perforations may be tapered in a straight way, tapered in a curved way, untapered, or any combination thereof at different points along their length. The perforations may include regions along their lengths which define enlarged cavities within the fibrous material structure. The perforations may be interconnected within the fibrous material structure, and such interconnections may comprise passages which may, for example, have tapering side walls which taper in a straight way, tapering side walls which taper in a curved way, untapered side walls, side walls which define enlarged cavities within the fibrous material structure, or any combination thereof at different points along their length.

The size and frequency of the perforations maybe varied according to requirements, aesthetic and functional. The transverse cross-sectional area of each perforation as appearing at the surface of the fibrous material may suitably be less than about 9 cm², for example less than about 7 cm², for example less than about 4 cm², for example less than about 1 cm².

The perforations may be provided in a regular array across the fibrous material, or may be irregularly provided, or at least one region of perforations may be regular and at least one other region may be irregular. The perforations may define indicia, for example letters, numbers, shapes, logos

### The Precursor Solution and Polymerisation Method

Preferably, the precursor solution is aqueous. The precursor solution may comprise aqueous solutions of one or more monomers that are ionic, non ionic, amphoteric, zwitterionic or combinations thereof.

The precursor solution preferably contains one or more monomers capable on polymerisation of forming a three-dimensional matrix of cross-linked polymer molecules.

The expressions "polymer", "polymerisation" and like expressions, used herein, includes within its scope homopolymerisation and copolymerisation and the products thereof.

Examples of suitable monomers for use in the present invention include: 2-acrylamido-2-methylpropane sulphonic acid or a substituted derivative thereof or a salt thereof (e.g. an ammonium or alkali metal salt such as sodium, potassium or lithium salts); acrylic acid or a substituted derivative thereof or a salt thereof (e.g. an alkali metal salt such as sodium, potassium or lithium salt); a polyalkylene glycol acrylate or a substituted derivative thereof; a polyalkylene glycol methacrylate or a substituted derivative thereof; acrylic acid (3-sulphopropyl) ester or a substituted derivative thereof or a salt thereof (e.g. an alkali metal salt such as sodium, potassium or lithium salt); diacetone acrylamide (N-1,1-dimethyl-3-oxobutyl-acrylamide); a vinyl lactam (e.g. N-vinyl pyrrolidone or a substituted derivative thereof); an optionally substituted N-alkylated acrylamide such as hydroxyethyl acrylamide; and an optionally substituted N,N-dialkylated acrylamide; and/or N-acryloyl morpholine or a substituted derivative thereof.

The hydrogel used in the present invention preferably comprises a plasticised three-dimensional matrix of cross-linked polymer molecules, and has sufficient structural integrity to be self-supporting even at very high levels of internal water content, with sufficient flexibility to conform to the surface contours of mammalian skin or other surface with which it is in contact.

The hydrogel generally comprises, in addition to the cross-linked polymeric network, an aqueous or non-aqueous plasticising medium including an organic plasticiser. This plasticising medium is preferably present in the same precursor solution as the monomer(s), although if desired it may be applied to the fibrous material separately from the monomer(s) but before polymerisation.

The fibrous material in contact with the precursor solution may suitably be in the form of a layer. This layer may suitably be provided for the polymerisation on a surface, most preferably itself provided with a release layer such as siliconised paper of plastic. After polymerisation of such an arrangement, the resultant hydrogel/fibrous composite will be in the form of a sheet having its underside protected by the release layer.

In the material to be polymerised, the precursor solution preferably comprises the monomer(s), cross-linking agent, plasticiser, and optionally water and other ingredients as desired. The polymerisation reaction is preferably a free-radical polymerisation with cross-linking, which may for example be induced by light, heat, radiation (e.g. ionising radiation), or redox catalysts, as is well known.

For example, the free radical polymerisation may be initiated in known manner by light (photoinitiation), particularly ultraviolet light (UV photoinitiation); heat (thermal initiation); electron beam (e-beam initiation); ionising radiation, particularly gamma radiation (gamma initiation); non-ionising radiation, particularly microwave radiation (microwave initiation); or any combination thereof. The precursor solution may include appropriate substances (initiators), at appropriate levels, e.g. up to about 5% by weight, more particularly between about 0.002% and about 2% by weight, which serve to assist the polymerisation and its initiation, in generally known manner.

Preferred photoinitiators include any of the following either alone or in combination:

Type I-α-hydroxy-ketones and benzilidimethyl-ketals e.g. Irgacure 651. These are believed on irradiation to form benzoyl radicals that initiate polymerisation. Photoinitiators of this type that are preferred are those that do not carry substituents in the *para* position of the aromatic ring. Examples include Irgacure184 and Daracur 1173 (alternatively: Darocur 1173 or Daracure 1173) as marketed by Ciba Chemicals, as well as combinations thereof.

A particularly preferred photoinitiator is 1-hydroxycyclohexyl phenyl ketone; for example, as marketed under the trade name Irgacure 184 by Ciba Speciality Chemicals. Also preferred are Daracur 1173 (2-hydroxy-2-propyl phenyl ketone) and mixtures of Irgacure 184 and Daracur 1173.

Photo-polymerisation is particularly suitable, and may be achieved using light, optionally together with other initiators, such as heat and/or ionizing radiation. Photoinitiation will usually be applied by subjecting the pre-gel reaction mixture containing an appropriate photoinitiation agent to ultraviolet (UV) light. The incident UV intensity, at a wavelength in the range from 240 to 420nm, is typically greater than about 10mW/cm². The processing will generally be carried out in a controlled manner involving a precise predetermined sequence of mixing and thermal treatment or history.

The UV irradiation time scale should ideally be less than 60 seconds, and preferably less than 10 seconds to form a gel with better than 95% conversion of the monomers. Those skilled in the art will appreciate that the extent of irradiation will be dependent on a number of factors, including the UV intensity, the type of UV source used, the photoinitiator quantum yield, the amount of monomer(s) present, the nature of the monomer(s) present and the presence of polymerisation inhibitor.

In one preferred embodiment, (on the one hand) the precursor solution in contact with the fibrous material and (on the other hand) the source of the polymerisation initiator (e.g. the radiation source) may move relative to one another for the polymerisation step. In this way, a relatively large amount of polymerisable material can be polymerised in one procedure, more than could be handled in a static system. This moving, or continuous, production system is preferred.

After completion of the polymerisation, the hydrogel/fibrous composite is preferably sterilised in conventional manner. The sterile composite may be used immediately, e.g. to provide a skin-adhesive layer in an article, or a top release layer may be applied to the composite for storage and transportation of the composite.

If desired, certain ingredients of the hydrogel may be added after the polymerisation and optional cross-linking reaction. However, it is generally preferred that substantially all of the final ingredients of the hydrogel are present in the precursor solution, and that - apart from minor conventional conditioning or, in some cases, subsequent modifications caused by the sterilisation procedure ― substantially no chemical modification of the hydrogel takes place after completion of the polymerisation reaction.

### Monomers

Optional substituents of the monomers used to prepare the hydrogels used in the present invention may preferably to selected from substituents which are known in the art or are reasonably expected to provide polymerisable monomers which form hydrogel polymers having the properties necessary for the present invention. Suitable substituents include, for example, lower alkyl, hydroxy, halo and amino groups.

Particularly preferred monomers include: the sodium salt of 2-acrylamido-2-methylpropane sulphonic acid, commonly known as NaAMPS, which is available commercially at present from Lubrizol as either a 50% aqueous solution (reference code LZ2405) or a 58% aqueous solution (reference code LZ2405A); acrylic acid (3-sulphopropyl) ester potassium salt, commonly known as SPA or SPAK (SPA or SPAK is available commercially in the form of a pure solid from Raschig); N-acryloyl morpholine; and hydroxyethyl acrylamide.

### Cross-linking Agents

Conventional cross-linking agents are suitably used to provide the necessary mechanical stability and to control the adhesive properties of the hydrogel. The amount of cross-linking agent required will be readily apparent to those skilled in the art such as from about 0.01% to about 0.5%, particularly from about 0.05% to about 0.4%, most particularly from about 0.08% to about 0.3%, by weight of the total polymerisation reaction mixture. Typical cross-linkers include tripropylene glycol diacrylate, ethylene glycol dimethacrylate, triacrylate, polyethylene glycol diacrylate (polyethylene glycol (PEG) molecular weight between about 100 and about 4000, for example PEG400 or PEG600), and methylene bis acrylamide.

### Organic Plasticisers

The one or more organic plasticiser, when present, may suitably comprise any of the following either alone or in combination: at least one polyhydric alcohol (such as glycerol, polyethylene glycol, or sorbitol), at least one ester derived therefrom, at least one polymeric alcohol (such as polyethylene oxide) and/or at least one mono- or poly-alkylated derivative of a polyhydric or polymeric alcohol (such as alkylated polyethylene glycol). Glycerol is the preferred plasticiser. An alternative preferred plasticiser is the ester derived from boric acid and glycerol. When present, the organic plasticiser may comprise up to about 45% by weight of the hydrogel composition.

### Surfactants

Any compatible surfactant may optionally be used as an additional ingredient of the hydrogel composition. Surfactants can lower the surface tension of the mixture before polymerisation and thus aid processing. The surfactant or surfactants may be non-ionic, anionic, zwitterionic or cationic, alone or in any mixture or combination. The surfactant may itself be reactive, i.e. capable of participating in the hydrogel-forming reaction. The total amount of surfactant, if present, is suitably up to about 10% by weight of the hydrogel composition, preferably from about 0.05% to about 4% by weight.

In a preferred embodiment of the invention the surfactant comprises at least one propylene oxide/ethylene oxide block copolymer, for example such as that supplied by BASF Plc under the trade name Pluronic P65 or L64.

### Other additives

The hydrogel in the composite of the present invention may include one or more additional ingredients, which may be added to the pre-polymerisation mixture or the polymerised product, at the choice of the skilled worker. Such additional ingredients are selected from additives known in the art, including, for example, water, organic plasticisers, surfactants, polymeric material (hydrophobic or hydrophilic in nature, including proteins, enzymes, naturally occurring polymers and gums), synthetic polymers with and without pendant carboxylic acids, electrolytes, pH regulators, colorants, chloride sources, bioactive compounds and mixtures thereof. The polymers can be natural polymers (e.g. xanthan gum), synthetic polymers (e.g. polyoxypropylene-polyoxyethylene block copolymer or poly-(methyl vinyl ether *alt* maleic anhydride)), or any combination thereof. By "bioactive compounds" we mean any compound or mixture included within the hydrogel for some effect it has on living systems, whether the living system be bacteria or other microorganisms or higher animals such as the patient. Bioactive compounds that may be mentioned include, for example, pharmaceutically active compounds, antimicrobial agents, antiseptic agents, antibiotics and any combination thereof. Antimicrobial agents may, for example, include: sources of oxygen and/or iodine (e.g. hydrogen peroxide or a source thereof and/or an iodide salt such as potassium iodide) (see, for example Bioxzyme™ technology, for example in The Sunday Telegraph (UK) 26 January 2003 or the discussion of the Oxyzyme™ system at www.wounds-uk.com/posterabstracts2003.pdf); honey (e.g. active Manuka honey); antimicrobial metals, metal ions and salts, such as, for example, silver-containing antimicrobial agents (e.g. colloidal silver, silver oxide, silver nitrate, silver thiosulphate, silver sulphadiazine, or any combination thereof); or any combination thereof.

In the Bioxzyme system, a dressing comprises two hydrogels. One contains glucose based antibacterial compounds and the other contains enzymes that convert the glucose into hydrogen peroxide. When these are exposed to air and contacted together at a wound site, the enzyme-containing gel adjacent the skin and the glucose-containing gel overlying the enzyme-containing gel, a low level steady flow of hydrogen peroxide is produced, which inhibits anaerobic bacteria. This antibacterial effect can be enhanced by the inclusion of a very low level of iodide (less than about 0.04%) in the hydrogel. The hydrogen peroxide and the iodide react to produce iodine, a potent antimicrobial agent.

Hydrogels incorporating antimicrobial agents may, for example, be active against such organisms as *Staphylococcus aureus* and *Pseudomonas aeruginosa*.

Agents for stimulating the healing of wounds and/or for restricting or preventing scarring may be incorporated into the hydrogel. Examples of such agents include growth factors e.g. from GroPep Ltd, Australia or Procyte, USA (see, e.g. WO-A-96/02270, the contents of which are incorporated herein by reference); cell nutrients (see, e.g., WO-A-93/04691, the contents of which are incorporated herein by reference); glucose (see, e.g., WO-A-93/10795, the contents of which are incorporated herein by reference); an anabolic hormone or hormone mixture such as insulin, triiodothyronine, thyroxine or any combination thereof (see, e.g., WO-A-93/04691, the contents of which are incorporated herein by reference); or any combination thereof.

Additional polymer(s), typically rheology modifying polymer(s), may be incorporated into the polymerisation reaction mixture at levels typically up to about 10% by weight of total polymerisation reaction mixture, e.g. from about 0.2% to about 10% by weight. Such polymer(s) may include polyacrylamide, poly-NaAMPS, polyethylene glycol (PEG), polyvinylpyrrolidone (PVP) or carboxymethyl cellulose.

The hydrogel in the composite of the present invention preferably consists essentially of a cross-linked hydrophilic polymer of a hydrophilic monomer and optionally one or more comonomer, together with water and/or one or more organic plasticiser, and optionally together with one or more additives selected from surfactants, polymers, pH regulators, electrolytes, chloride sources, bioactive compounds and mixtures thereof, with less than about 10% by weight of other additives.

For further details of the hydrogel material for use in the present invention, and its preparation, please refer to the following publications: PCT Patent Applications Nos. WO-97/24149, WO-97/34947, WO-00/06214, WO-00/06215, WO-00/07638, WO-00/46319, WO-00/65143 and WO-01/96422, the disclosures of which are incorporated herein by reference.

The water activity, which is related to the osmolarity and the ionic strength of the precursor solution (as measured, for example, by a chilled mirror dewpoint meter, Aqualab T3) is preferably between 0.05 and 0.99, more preferably between, 0.2 and 0.99, and even more preferably between 0.3 and 0.98. The higher the ionic strength, reflected in a lower water activity, the lesser the swelling of the fibre structure. The ionic strength of the precursor solution can therefore be used to optimise the hydrogel composite properties.

### Impregnation of the Fibrous Material

Preferably, the polymerising and crosslinking of the at least one monomer takes place after completion of the at least partial swelling of the fibrous material.

The impregnation of the fibre structure may be achieved for example by dipping the fibre structure into a bath of solution or by dispensing the solution from, for example, a slot die onto the fibre structure.

Alternatively, the precursor solution may be dispensed onto a substrate and the fibre structure placed on top, using the absorbency characteristics of the fibre to take up the precursor solution.

The length of time between impregnating the fibre and curing (polymerising and optionally crosslinking) the composite may be varied to allow control over the extent of fibre swelling and resultant properties for example fluid uptake and strength of the swollen composite. Preferably, the length of time the precursor solution is in contact with the fibre before curing is between 0.5 and 45 seconds, more preferably between 1 and 20 seconds.

The ratio of fibre to precursor solution is from 1:1 to 1:30, preferably 1:2 to 1:20, more preferably 1:3 to 1:18 and even more preferably from 1:4 to 1:14 as determined by the weight of fibre per square meter and the amount (weight) of precursor solution incorporated per square meter.

The nature and extent of impregnation of the fibrous material by the precursor solution can thus be varied extensively according to the desired characteristics of the final composite material. For example, there can be a gradient, which can be linear or non-linear or part-linear-part-non-linear, of the amount (e.g. by weight) of the precursor solution taken up per unit volume of fibrous material, according to the distance into the bulk of the fibrous material. That gradient will be such that, at any particular region or regions within the fibrous material, the amount of precursor solution per unit volume of fibrous material increases or decreases with distance into the bulk of the fibrous material. Alternatively, regions or the whole of the bulk of the fibrous material may be impregnated in such a way that there is a uniform or substantially uniform distribution of the precursor solution through the relevant portion or whole of the bulk of the fibrous material.

### Articles and Applications

The hydrogels present in the composites described herein may be adhesive or non-adhesive. When they are adhesive, they are typically tacky to the touch, and therefore lend themselves to applications where a certain degree of adhesion to mammalian (particularly human) skin is required. When the hydrogel composites described herein are non-adhesive, they typically have no or negligible tackiness to the touch.

Adhesive hydrogel composites according to the present invention may preferably be capable of being removed from the skin without undue pain, discomfort or irritation, and without leaving a substantial mark or residue on the skin.

The composites may thus suitably be used in a range of skin contact or covering articles and applications where the composite is brought into contact either with skin or with an intermediary member which interfaces between the composite and the skin. The composite may be unsupported or may be supported on a part of a larger article for some specific use, e.g. a backing structure. The composites may suitably be in the form of sheets, coatings, membranes or laminates.

Articles and applications include patches, tapes, bandages, devices and dressings of general utility or for specific uses, including without limitation biomedical, skin care, personal and body care, palliative and veterinary uses such as, for example, skin electrodes for diagnostic (e.g. ECG), stimulation (e.g. TENS), therapeutic (e.g. defibrillation) or electrosurgical (e.g. electrocauterisation) use; dressings and reservoirs for assisting wound and bum healing, wound and bum management, skin cooling, skin moisturizing, skin warming, aroma release or delivery, decongestant release or delivery, pharmaceutical and drug release or delivery, perfume release or delivery, fragrance release or delivery, scent release or delivery, and other skin contacting devices such as absorbent pads or patches for absorbing body fluids (e.g. lactation pads for nursing mothers), cosmetic device adhesives, hairpiece adhesives and clothing adhesives; and adhesive flanges and tabs for fecal collection receptacles, ostomy devices and other incontinence devices.

The articles incorporating the hydrogel composites according to the present invention may have any convenient shape or configuration. Particularly but not exclusively, the articles may be provided in any conventional shape or configuration for the category of articles concerned, or any approximation thereto. For example, articles in substantially sheet form may be square, rectangular, triangular, polygonal, circular, oval, ellipsoidal, irregular, any of the above with indentations, any of the above with projections, or an approximation to any of the above.

The articles incorporating the hydrogel composites according to the present invention may incorporate the said composite as an island surrounded by other portions of that or those face(s) of the article of which the hydrogel composite forms part, or the said composite may extend to one or more edge of such face(s). Where the hydrogel composite is an island surrounded by other portions of that or those face(s) of the article of which the hydrogel composite forms part, the surrounding portions may be provided with other adhesive materials such as conventional pressure sensitive adhesives, such as, for example, acrylate ester adhesives, e.g. to provide skin adhesion.

Articles such as, for example, patches, tapes, bandages, devices, dressings of general utility or for specific uses, including without limitation biomedical, skin care, personal and body care, palliative and veterinary uses such as, for example, skin electrodes for diagnostic (e.g. ECG), stimulation (e.g. TENS), therapeutic (e.g. defibrillation) or electrosurgical (e.g. electrocauterisation) use; dressings and reservoirs for assisting wound and bum healing, wound and bum management, skin cooling, skin moisturizing, skin warming, aroma release or delivery, decongestant release or delivery, pharmaceutical and drug release or delivery, perfume release or delivery, fragrance release or delivery, scent release or delivery, and other skin contacting devices such as absorbent pads or patches for absorbing body fluids (e.g. lactation pads for nursing mothers), cosmetic device adhesives, hairpiece adhesives and clothing adhesives; and adhesive flanges and tabs for fecal collection receptacles, ostomy devices and other incontinence devices may suitably comprise a support member, typically in sheet or substantially sheet form, which is suitably flexible, conformable to the skin, with which the hydrogel composite according to the present invention is associated. The support member may be perforated or non-perforated. The support member may be unitary in construction or constructed as a composite of multiple parts, e.g. a plurality of layers. The construction of the parts other than the hydrogel composite of the present invention may suitably be generally conventional. For example, the support member of a wound dressing or the like may suitably comprise a flexible water-permeable or water-impermeable backing layer or other structure, which may optionally incorporate other adhesives if desired, and/or an absorbent layer or other structure (e.g. a foam or other absorbent material). Such additional parts may suitably be formed in any suitable material conventionally used for such articles, including for example synthetic and natural materials, e.g. polymers such as polyurethane, polyolefins, hydrogels, or any combination thereof.

Articles comprising multiple parts ― e.g. layers or sheets - may suitably include adhesives (e.g. acrylic adhesives) to bond the parts together, or the parts may be retained together in the article by partial melting together, by crimping, embossing or other mechanical retention method, or any combination thereof.

If desired, a part of an article or a complete article, such as a skin patch, wound or bum dressing, bandage or plaster can incorporate a system for generating an bioactive agent such as a pharmaceutically active agent or combination of agents (drug), an antimicrobial agent or combination of agents, an antiseptic agent or combination of agents, or an antibiotic agent or combination of agents. Such a system may, for example, be the Bioxzyme™ system mentioned above.

Parts of the articles which are adapted to contact a patient during use, and at least those portions of the article adjacent to the patient-contacting parts, may if desired be sterilised and may conveniently be stored in sterile packaging.

The hydrogel composites according to the present invention, and articles incorporating them, are suitably provided for storage, transportation and before use with a release sheet overlying any adhesive portions. The release sheet may take any conventional form, e.g. a paper or plastics sheet which may suitably be coated with a non-stick material such as silicone or polytetrafluoroethylene.

If desired, other portions of the articles may also suitably be provided for storage, transportation and before use with a release sheet overlying any other portions. The release sheet may take any conventional form, e.g. a paper or plastics sheet which may suitably be coated with a non-stick material such as silicone or polytetrafluoroethylene. For example, a surface of an article such as skin dressing which in use is directed away from the wearer's skin may if desired be provided with a surface or surface material that benefits from protection before use. In that case, for example, the said surface or surface material can be protected for storage and transportation before use by the release layer, which can then be removed and discarded after the article has been applied to the wearer's skin.

### Examples

The following non-limiting examples are provided as further illustration of the present invention, but without limitation.

### Example 1

A 10 cm² sample of Oasis™ 180 gsm polyacrylate fibre was immersed into a bath of precursor solution comprising 70 parts by weight of 58% aqueous solution of the sodium salt of acrylamidomethylpropanesulphonic acid (Na AMPS, LZ2405 Lubrizol), 30 parts glycerol and 0.14 parts of a 1 to 10 (by weight) mixture of Daracure 1173 photoinitiator (Ciba Speciality Chemicals) and IRR280 cross-linker (PEG400 diacrylate, UCB Chemicals). The time of immersion was approximately 2 secs. The impregnated structure was then placed on a conveyor belt moving at 7m/s and cured with a NUVA Solo 30 medium pressure mercury arc lamp (GEW). The ratio of fibre to precursor solution by weight was 1:11. The resulting composite had a saline absorbancy of ca. 6g/g over 24 hours and had excellent strength.

### Example 2

A 10 cm² sample of Oasis™ 70 gsm polyacrylate fibre was immersed into a bath of precursor solution comprising 70 parts by weight of 58% aqueous solution of the sodium salt of acrylamidomethylpropanesulphonic acid (Na AMPS, LZ2405 Lubrizol), 30 parts glycerol and 0.14 parts of a 1 to 10 (by weight) mixture of Daracure 1173 photoinitiator (Ciba Speciality Chemicals) and IRR280 cross-linker (PEG400 diacrylate, UCB Chemicals). The time of immersion was approximately 2 secs. The impregnated structure was then placed on a conveyor belt moving at 7m/s and cured with a NUVA Solo 30 medium pressure mercury arc lamp (GEW). The ratio of fibre to precursor solution by weight was 1:5. The resulting composite had a saline absorbancy of ca. 12g/g over 24 hours and had good strength.

### Example 3

A 10 cm² sample of Oasis™ 120 gsm polyacrylate fibre was immersed into a bath of precursor solution comprising 70 parts by weight of 58% aqueous solution of the sodium salt of acrylamidomethylpropanesulphonic acid (Na AMPS, LZ2405 Lubrizol), 30 parts glycerol and 0.14 parts of a 1 to 10 (by weight) mixture of Daracure 1173 photoinitiator (Ciba Speciality Chemicals) and IRR280 cross-linker (PEG400 diacrylate, UCB Chemicals). The time of immersion was approximately 2 secs. The impregnated structure was then placed on a conveyor belt moving at 7m/s and cured with a NUVA Solo 30 medium pressure mercury arc lamp (GEW). The ratio of fibre to precursor solution by weight was 1:11. The resulting composite had a saline absorbancy of ca. 6g/g over 24 hours and had excellent strength.

### Example 4

A 10 cm² sample of carboxymethyl cellulose, 100gsm fibre (Acordis Speciality Fibres) was immersed into a bath of precursor solution comprising 70 parts by weight of 58% aqueous solution of the sodium salt of acrylamidomethylpropanesulphonic acid (NaAMPS, LZ2405 Lubrizol), 30 parts glycerol and 0.14 parts of a 1 to 10 (by weight) mixture of Daracure 1173 photoinitiator (Ciba Speciality Chemicals) and IRR280 cross-linker (PEG400 diacrylate, UCB Chemicals). The time of immersion was approximately 2 secs. The impregnated structure was then placed on a conveyor belt moving at 7m/s and cured with a NUVA Solo 30 medium pressure mercury arc lamp (GEW). The resulting composite had a saline absorbency of ca. 8g/g over 24 hours and had excellent strength.

### Example 5

A 10 cm² sample of calcium alginate, 100gsm fibre (Acordis Speciality Fibres) was immersed into a bath of precursor solution comprising 70 parts by weight of 58% aqueous solution of the Sodium salt of acrylamidomethylpropanesulphonic acid (NaAMPS, LZ2405 Lubrizol), 30 parts glycerol and 0.14 parts of a 1 to 10 (by weight) mixture of Daracure 1173 photoinitiator (Ciba Speciality Chemicals) and IRR280 cross-linker (PEG400 diacrylate, UCB Chemicals). The time of immersion was approximately 2 secs. The impregnated structure was then placed on a conveyor belt moving at 7m/s and cured with a NUVA Solo 30 medium pressure mercury arc lamp (GEW). The resulting composite had a saline absorbancy of ca. 10g/g over 24 hours and had excellent strength.

### Example 6

A 10 cm² sample of Oasis™ 180gsm fibre (Acordis Speciality Fibres) was perforated with a flat bed die such that the holes were ca. 7mm in diameter and separated from edge to edge by 5mm was immersed into a bath of precursor solution comprising 70 parts by weight of 58% aqueous solution of the sodium salt of acrylamidomethylpropanesulphonic acid (Na AMPS, LZ2405 Lubrizol), 30 parts glycerol and 0.14 parts of a 1 to 10 (by weight) mixture of Daracure 1173 photoinitiator (Ciba Speciality Chemicals) and IRR280 cross-linker (PEG400 diacrylate, UCB Chemicals). The time of immersion was approximately 2 secs. The impregnated structure was then placed on a conveyor belt moving at 7m/s and cured with a NUVA Solo 30 medium pressure mercury arc lamp (GEW). The resulting composite had a saline absorbancy of ca. 6g/g over 24 hours and had excellent strength.

### Example 7

A 10 cm² sample of calcium alginate, 100gsm fibre (Acordis Speciality Fibres) was immersed into a bath of precursor solution comprising 52 parts by weight of 58% aqueous solution of the sodium salt of acrylamidomethyl-propanesulphonic acid (NaAMPS, LZ2405 Lubrizol), 48 parts water and 0.14 parts of a 1 to 10 (by weight) mixture of Daracure 1173 photoinitiator (Ciba Speciality Chemicals) and IRR280 cross-linker (PEG400 diacrylate, UCB Chemicals). The time of immersion was approximately 2 secs. The impregnated structure was then placed on a conveyor belt moving at 7m/s and cured with a NUVA Solo 30 medium pressure mercury arc lamp (GEW). The resulting composite had a saline absorbancy of ca. 10g/g over 24 hours and had excellent strength.

### Example 8

A precursor solution comprising 70 parts by weight of 58% aqueous solution of the sodium salt of acrylamidomethylpropanesulphonic acid (NaAMPS, LZ2405 Lubrizol), 30 parts glycerol and 0.14 parts of a 1 to 10 (by weight) mixture of Daracure 1173 photoinitiator (Ciba Speciality Chemicals) and IRR280 cross-linker (PEG400 diacrylate, UCB Chemicals) was dispensed from a slot die 120mm wide at a coat weight of 1.4kg/sqm onto a moving web of siliconised polyester film. A 10 cm² sample of Oasis™ 180gsm fibre (Acordis Speciality Fibres) was placed on top and remained in contact for 15 seconds before being cured with a NUVA Solo 30 medium pressure mercury arc lamp (GEW). The resulting composite had a saline absorbancy of ca. 6g/g over 24 hours and had excellent strength.

### Example 9

A 10 cm² sample of Lantor 46.09.049, cellulose/polyolefin-based, alginate-containing non-woven was perforated with a flat bed die such that the holes were about 7mm in diameter and separated from edge to edge by 5mm was immersed into a bath of precursor solution comprising 70 parts by weight of a 58% aqueous solution of the sodium salt of acrylamidomethylpropanesulphonic acid (Na AMPS, LZ2405 Lubrizol), 30 parts glycerol and 0.14 parts of a 1 to 10 (by weight) mixture of Daracure 1173 photoinitiator (Ciba Speciality Chemicals) and IRR280 cross-linker (PEG400 diacrylate, UCB Chemicals). The time of immersion was approximately 2 seconds. The impregnated structure was then placed on a conveyor belt moving at 7m/s and cured with a NUVA Solo 30 medium pressure mercury arc lamp (GEW). The resulting composite had good saline absorbency over 24 hours and had excellent strength.

### Example 10

A 10 cm² sample of Lantor 71.01.6 Oasis™/polyester-based non-woven was perforated with a flat bed die such that the holes were about 7mm in diameter and separated from edge to edge by 5mm was immersed into a bath of precursor solution comprising 70 parts by weight of 58% aqueous solution of the sodium salt of acrylamidomethylpropanesulphonic acid (Na AMPS, LZ2405 Lubrizol), 30 parts glycerol and 0.14 parts of a 1 to 10 (by weight) mixture of Daracure 1173 photoinitiator (Ciba Speciality Chemicals) and IRR280 cross-linker (PEG400 diacrylate, UCB Chemicals). The time of immersion was approximately 2 secs. The impregnated structure was then placed on a conveyor belt moving at 7m/s and cured with a NUVA Solo 30 medium pressure mercury arc lamp (GEW). The resulting composite had good saline absorbency over 24 hours and had excellent strength.

The above broadly describes the present invention, without limitation. Variations and modifications as will be readily apparent to those of ordinary skill in this art are intended to be covered by this application and all subsequent patents.

## Claims

1. A method for producing a hydrogel/fibre composite comprising: impregnating fibres of a fibrous material with a precursor solution comprising at least one polymerisable, and optionally also crosslinkable, monomer such that at least partial swelling of the fibres takes place; and polymerising, and optionally also crosslinking, the at least one monomer after impregnation and at least partial swelling of the fibres such that the integrity of the fibrous material is at least partially preserved in the resulting hydrogel/fibre composite, provided that the crosslinking is not initiated solely by cation release from the fibres of the fibrous material.

2. A method according to claim 1, wherein crosslinking, when present, is achieved totally by means other than cation release from fibres of the fibrous material.

3. A method according to claim 1, wherein polymeric entanglement takes place during production of the hydrogel/fibre composite.

4. A method according to any one of the preceding claims, wherein the fibrous material is a coherent structure comprised of fibres, capable of being swollen by aqueous fluid, that are held together to maintain overall coherency of the structure.

5. A method according to any one of the preceding claims, wherein the fibrous material is selected from knitted, woven and non-woven materials.

6. A method according to any one of the preceding claims, wherein the fibrous material is selected from felts, mats and the like.

7. A method according to any one of the preceding claims, wherein the fibres of the fibrous material are natural or synthetic polymeric fibres or any combination thereof.

8. A method according to any one of the preceding claims, wherein the fibres of the fibrous material comprise calcium alginate fibres, carboxymethyl cellulose fibres or sodium polyacrylate fibres.

9. A method according to any one of the preceding claims, wherein one or more additional ingredients are added to the pre-polymerisation mixture or the polymerised product.

10. A method according to claim 9, wherein the one or more additional ingredients are selected from water; organic plasticisers; surfactants; polymeric material which may be hydrophobic or hydrophilic in nature, for example proteins, enzymes, naturally occurring polymers and gums, and synthetic polymers with and without pendant carboxylic acids; electrolytes; pH regulators; colorants; chloride sources; bioactive agents, for example pharmaceutically active compounds, antimicrobial agents, antiseptic agents, antibiotics, agents for stimulating the healing of wounds and/or for restricting or preventing scarring, and any combination thereof; and mixtures thereof.

11. A method according to any one of the preceding claims, wherein the precursor solution comprises the at least one polymerisable monomer, a cross-linking agent, an organic plasticiser, and optionally water and at least one other ingredient as desired.

12. A method according to any one of the preceding claims, wherein the least one polymerisable monomer is selected from: 2-acrylamido-2-methylpropane sulphonic acid or a substituted derivative thereof or a salt thereof; acrylic acid or a substituted derivative thereof or a salt thereof; a polyalkylene glycol acrylate or a substituted derivative thereof; a polyalkylene glycol methacrylate or a substituted derivative thereof; acrylic acid (3-sulphopropyl) ester or a substituted derivative thereof or a salt thereof; diacetone acrylamide (N-1,1-dimethyl-3-oxobutyl-acrylamide); a vinyl lactam; an optionally substituted N-alkylated acrylamide; an optionally substituted N,N-dialkylated acrylamide; and/or N-acryloyl morpholine or a substituted derivative thereof.

13. A method according to any one of the preceding claims, wherein the polymerisation reaction is a free-radical polymerisation.

14. A method according to any one of the preceding claims, wherein the polymerisation reaction is a free-radical polymerisation with cross-linking.

15. A method according to claim 13 or 14, wherein the free-radical polymerisation is induced by light, particularly ultraviolet light; heat; electron beam; ionising radiation, particularly gamma radiation; non-ionising radiation, particularly microwave radiation; redox catalysts; or any combination thereof.

16. A method according to any one of the preceding claims, wherein the precursor solution in contact with the fibrous material and a radiation source for inducing the polymerisation move relative to one another for the polymerisation.

17. A method according to any one of the preceding claims, when performed in a moving or continuous production system for producing the hydrogel/fibre composite.

18. A method according to any one of the preceding claims, further comprising incorporating the resultant hydrogel/fibre composite into a biomedical product.

19. A method according to any one of the preceding claims, wherein the hydrogel/fibre composite is prepared in the form of a sheet having at least one sheet face protected by a release layer.

20. A method for preparing a hydrogel/fibre composite which is capable of undergoing at least one hydration/dehydration cycle while maintaining very acceptable structural integrity and strength throughout, the main change across the cycle being the dimensions as the swelling and shrinking takes place, with substantial retention of general form and self-supportability of the structure, the method comprising: impregnating fibres of a fibrous material with a precursor solution comprising at least one polymerisable, and optionally also crosslinkable, monomer such that at least partial swelling of the fibres takes place; and polymerising, and optionally also crosslinking, the at least one monomer after impregnation and a least partial swelling of the fibres such that the integrity of the fibrous material is at least partially preserved in the resulting hydrogel/fibre composite, provided that the crosslinking is not initiated solely by cation release from the fibres of the fibrous material.

21. A method according to claim 20, wherein the steps are as defined in any one of claims 2 to 19.

22. A hydrogel/fibre composite prepared or preparable by a method as defined in any one of claims 1 to 21.

23. A hydrogel/fibre composite according to claim 22, which is adhesive to human skin and removable therefrom by peeling without causing pain, or pulling hair, or leaving a residue.

24. A biomedical product comprising a hydrogel/fibre composite as defined in claim 22 or 23.

25. A biomedical product according to claim 24, which is selected from: patches; tapes; bandages; dressings; skin electrodes for diagnostic use; skin electrodes for stimulation; therapeutic skin electrodes; electrosurgical skin electrodes; dressings and reservoirs for assisting wound and bum healing, wound and burn management, skin cooling, skin moisturizing, skin warming, aroma release or delivery, decongestant release or delivery, pharmaceutical and drug release or delivery, perfume release or delivery, fragrance release or delivery, or scent release or delivery; absorbent pads or patches for absorbing body fluids; cosmetic device adhesives; hairpiece adhesives; clothing adhesives; adhesive flanges and tabs for fecal collection receptacles; adhesive flanges and tabs for ostomy devices; and adhesive flanges and tabs for incontinence devices other than fecal collection receptacles and ostomy devices.
